(19)

**Europäisches Patentamt**
**European Patent Office**
**Office européen des brevets**

(11) **EP 2 253 660 A1**

(12) **EUROPEAN PATENT APPLICATION**

(43) Date of publication:
**24.11.2010 Bulletin 2010/47**

(51) Int Cl.:
*C08J 5/18* (2006.01)    *C08J 7/04* (2006.01)
*C09D 201/00* (2006.01)    *G02B 1/04* (2006.01)
*G02B 5/02* (2006.01)

(21) Application number: **09290543.9**

(22) Date of filing: **06.07.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(30) Priority: **20.05.2009 KR 20090043955**

(71) Applicant: **Toray Advanced Materials Korea Inc.
Gumi-si
Gyeongsangbuk-do
730-350 (KR)**

(72) Inventors:
• **Sim, Chang-Hoon
Seoul (KR)**
• **Moon, Ki-Jeong
Seoul (KR)**
• **Jun, Hae-Sang
Seoul (KR)**

(74) Representative: **Novagraaf Technologies
122, rue Edouard Vaillant
92593 Levallois-Perret Cedex (FR)**

Remarks:
A request for correction of the description has been filed pursuant to Rule 139 EPC. A decision on the request will be taken during the proceedings before the Examining Division (Guidelines for Examination in the EPO, A-V, 3.).

(54) **High-efficiency light diffusing polymeric film and manufacturing method thereof**

(57)    The present invention generally relates to a high-efficiency light diffusing polymeric film and a manufacturing method thereof, and more specifically, to a high-efficiency light diffusing polymeric film which ensures a high level of light transmittance and light diffusion compatibly and which can be manufactured by a relatively simple method such as coating or extrusion, and a manufacturing method thereof.

The high-efficiency light diffusing polymeric film of the present invention comprises a first polymer which is a light transmissible medium and a second polymer which forms light scattering particles, as two different immiscible polymers that have a small refractive index difference of 0.001 to 0.5, and the polymeric film comprises 30 to 70 parts by weight of the second polymer with respect to 100 parts by weight of the first polymer.

The method for manufacturing a high-efficiency polymeric film is **characterized in that** the polymeric film is manufactured such that a first polymer forms a continuous phase and a second polymer forms a dispersed phase through coating or extrusion.

FIG. 1

EP 2 253 660 A1

**Description**

**Technical Field**

The present invention generally relates to a high-efficiency light diffusing polymeric film and a manufacturing method thereof, and more specifically, to a high-efficiency light diffusing polymeric film which ensures a high level of light transmittance and light diffusion compatibly and which can be manufactured by a relatively simple method such as coating or extrusion, and a manufacturing method thereof.

**Background Art**

In general, when we look into the principle of light scattering phenomenon among the interactions between light and materials which is one of the natural phenomena, such as the light scattering phenomenon between homogeneous media such as cloud, milk or human cellular tissues and particles, light propagation properties are affected not only by the refractive index difference between a light transmissible medium which is used as an industrial material to implement light diffusion property and light scattering particles, but also by cross-section morphology such as the size and volume fraction of the light scattering particles. Consequently, the light transmittance and light diffusion affect each other closely in a negative way. Based on this scientific fact, there have been a lot of attempts to overcome the above mentioned disadvantage; however, there is no technique for the structure of polymeric material which can provide a high level of light transmittance and light scattering at the same time in a compatible manner.

Among other theories of light scattering principle which make use of the cross-section morphology, the theories by Rayleigh (1899) and Mie (1908) are widely known. For such theories, the Rayleigh's theory applies when the size of light scattering particles is smaller than the wavelength of light and the Mie's theory applies when the size of light scattering particles is larger than the wavelength of light in the light scattering phenomenon. For light diffusion without causing any wavelength conversion of light, according to the Mie's theory, the size of light scattering particles is designed to be larger than the wavelength of light. Accordingly, prior art has been commonly focused on designing optimized size and volume fraction of light scattering particles.

The first product using light diffusion by controlling the internal structure of a light diffusing medium is a lighting apparatus made of glass. In 1933, Henry conducted an experiment and accordingly presented a theoretical foundation which showed that it was possible to acquire 30 times higher light diffusion intensity when the crystalline pattern of internal structure of glass was adjusted than when the surface roughness of glass was adjusted. As a result, most of lighting apparatus are manufactured in such a way that the internal crystalline structure of glass is adjusted during the cooling process when a glass panel is manufactured.

Recently, there have been attempts to improve the efficiency of light transmittance and light diffusion through combined configuration of parts while using a selective light source to enhance its efficiency owing to the development of light emitting display devices such as LCD or LED, as a direct application of polymeric films. For example, a plurality of polymeric films such as LGPs (light guide plates), diffusion sheets, and prism sheets are configured combinedly to form an LCD backlight unit. Nowadays, there have been a number of efforts to modify such a complex configuration into a simpler combined configuration, and it is expected to be used widely.

Such efforts includes a method in which higher efficiency of light diffusion is sought through higher light scattering with less particle volume fraction by making the refractive index difference larger between a light transmissible medium consisting of polymers and light scattering particles. However, it is recognized that the prior art has a limitation in that it is hard to overcome the deterioration of brightness, of brightness uniformity and of hue uniformity due to irregular dispersion of light scattering particles in controlling the cross-section morphology. As another scientific approach, Barthelemy presented a theory in the journal Nature (A Levy Flight for Light, May 2008, Nature) that light performed a light diffusion behavior so called 'Levy flight'. As a result, it proposes that it is necessary to conduct researches on new optical materials based on the interpretation of light diffusion behavior according to cross-section morphology to acquire uniform light diffusion efficiency because light transmittance and light scattering show a behavior dependent upon the cross-section morphology in the optical material which makes use of large refractive index difference.

Alternately, there is an example which successfully made use of large refractive index difference by controlling cross-section morphology in the case of optical fibers; however, this is a different case from the above light emitting display devices. Furthermore, optical recording devices, light concentrator devices or all optical devices which trigger optical nonlinearity intentionally and make use of the nonlinearity are different cases from the examples described in the present invention.

Nonetheless, prior art commonly relies on the principle which makes use of large refractive index difference only in devising light diffusion materials, though the methods used are different. Through such methods, there have been a number of attempts to ensure both light transmittance and light scattering at the same time. However, it has not been reported yet that there is any material which shows 90% or higher in both total light transmittance (transmittance of light coming out in a straight path) and haze (an efficiency index of light diffusion by light scattering).

Recently, a method has been reported in which a protrusion or a dent is made in relief or in intaglio on polymeric films or polymeric sheets to induce the concentration or diffusion of light instead of adding light scattering particles into light transmissible media, departing from the methods mentioned above. However, the biggest problem of such method is that it is extremely hard to maintain consistent light quality in a practical way. To manufacture in such a way, so called an imprint method is utilized, in which a mold roll that is the equipment to manufacture such films or sheets from polymer material is embossed in relief so that when the polymer material is fed through the equipment, the polymer material is molded into a polymeric film by UV radiation. Accordingly, there is a limitation in quality due to the fact that it is hard to separate the polymeric film from the mold equipment after curing because of the polymeric properties. In addition, if any additives are used to facilitate the separation, the desired level of quality may not be achieved. Moreover, maintenance cost for the equipment may soar when a large-sized light emitting display device is manufacture. More importantly, if such a new method is put into practice, it may satisfy the low level of requirement in industry; however, it is hard to obtain the compatibility between light transmittance and light diffusion, as addressed previously.

In addition, there has been an attempt to fundamentally overcome the above-mentioned drawbacks by inserting large amount of air bubbles into polymeric films. In this case, there is a big improvement in the maximum value of light transmittance from an existing level of 45% to 75% and the haze value has also increased to 80% or higher. Therefore, it is expected that such polymeric films can be utilized usefully in parts such as recent LED backlight units; however, this method still remains within the limit of prior art in that partial wavelength conversion of white light is caused due to the difficulty in the generation of air bubbles in a uniform size. More importantly, there is a problem of decreased heat resistance of polymers if the polymeric films are used for a long time under a light source and there is a limitation in actual quality control because the boundaries between neighboring air bubbles may move, due to the large amount of air bubble content within polymeric films in the matter of cross-section morphology.

As mentioned above, the prior art remains at a low level of compatibility especially between high light transmittance and light diffusion at the same time, and has various problems and limitations in practical stage in using polymers as optical materials. Therefore, there exists a great need for improvement in polymeric films.

## Disclosure of Invention

Therefore, the present invention is designed to solve the above mentioned problems, it is an object of the present invention to provide a high-efficiency light diffusing polymeric film which provides a high level of light transmittance and light diffusion compatibly and which can be manufactured by a relatively simple method such as coating or extrusion, and a manufacturing method thereof.

These and other objects and advantages of the present invention will be apparent from the following description, appended claims, and accompanying drawings.

The above object is achieved by a high-efficiency light diffusing polymeric film comprising a first polymer which is a light transmissible medium and a second polymer which forms light scattering particles, as two different immiscible polymers that have a small refractive index difference of 0.001 to 0.5, wherein the polymeric film comprises 30 to 70 parts by weight of the second polymer with respect to 100 parts by weight of the first polymer.

Here, the two different immiscible polymers are **characterized in that** when the first and the second polymers are mixed into a solvent and the solvent containing the first and second polymers is dried, the solvent has a turbidity value of 50 to 200 NTU.

Preferably, the two different immiscible polymers do not mix physically each other and go through a phase separation into a continuous phase and a dispersed phase, wherein the dispersed phase has a spherical shape or a near spherical shape.

It is preferable that the first polymer and the second polymer comprise at lest one of PMMA (polymethyl methacrylate), PS (poly styrene), PC (poly carbonate), polyester, phenoxy resin, acrylic resin, epoxy resin or silicone resin.

It is preferable that the present invention further comprises 5 to 95 parts by weight of energy beam-curable low molecular acrylate with respect to 100 parts by weight of the first and the second polymers, to prevent an additional phase separation of the dispersed phase or the continuous phase in the cross-section morphology formed by the two different immiscible polymers and to stabilize the cross-section morphology.

The above object is further achieved by a method for manufacturing a high-efficiency light diffusing polymeric film, wherein the polymeric film is manufactured such that the first polymer forms a continuous phase and the second polymer forms a dispersed phase through coating or extrusion.

According to the present invention, the phase separation phenomenon of at least two different immiscible polymers that have a small refractive index difference and do not mix each other is used as a main approach, to ensure a high level of light scattering and light transmittance compatibly. For this purpose, cross-section morphology of a high level of volume fraction is adjusted, thereby making it possible to design the light diffusion properties in a wide range to the requirements of brightness and brightness uniformity.

In addition, according to the present invention, it is possible to manufacture polymeric films with the above light diffusion property in a very simple and easy method such as coating or extrusion, which is very economic and guarantees high productivity. Especially, it is possible to usefully apply to light emitting display devices of large size.

Furthermore, according to the present invention, the dispersed phase and continuous phase are adjusted by the addition of immiscible polymers that do not mix each other, thereby making it possible to apply to various designs of optical properties. For example, it is possible to convert ultraviolet rays into near infrared rays in a light concentrator film for solar batteries through substitution reaction of chromophore, which causes wavelength conversion, on the surface of the second polymer which forms in dispersed phase, among other applications.

## Brief Description of the Drawings

These and other features, aspects, and advantages of the present invention will help for better understanding with regard to the following description, appended claims, and accompanying drawings, in which like components are referred to by like reference numerals. In the drawings:

Fig. 1 is a conceptual diagram of cross-section morphology of the continuous phase of a first polymer and a spherical shape of the dispersed phase of a second polymer of the present invention; and

Fig. 2 is a conceptual diagram of cross-section morphology of the continuous phase of a first polymer and a near spherical shape of the dispersed phase of a second polymer of the present invention.

<Brief Description of the Main parts of the Drawing>

1: continuous phase of the first polymer;
2: a spherical shape of the dispersed phase of the second polymer; and
3: a near spherical shape of the dispersed phase of the second polymer.

## Best Mode for Carrying out the Invention

Hereinafter, preferred embodiments of the present invention will be described in detail with reference to the accompanying drawings. It should be understood that the detailed description of the preferred embodiments of the invention are given by way of illustration only, and accordingly various changes and modifications within the spirit and scope of the invention will become apparent to those skilled in the art from this detailed description.

The high-efficiency light diffusing polymeric film of the present invention is a polymeric film comprising a mixture of at least two different immiscible polymers that have a small refractive index difference and that are not miscible thermodynamically each other. The present invention further comprises a method for forming a structure of continuous phase and dispersed phase respectively in cross-section morphology through phase separation and a method for manufacturing a polymeric film using the same.

According to the present invention, it is possible to ensure a high level of light transmittance and light diffusion compatibly through the method described above, and to acquire a polymeric film through a relatively simple and easy method such as coating or extrusion by applying the above mentioned principle to the polymeric film. As a result, the present invention has an outstanding effect in principle or in economy compared with prior art such as a method in which different spherical particles with a large refractive index difference are inserted into a polymeric film, a method in which a protrusion is made in relief on the surface of polymeric films or polymeric sheets, or a technique in which multiple layers of polymeric films and polymeric sheets are stacked on each other to control the light diffusion property of the films. Therefore, it is usefully applicable not only to backlight units for LCD of a line light source, LED of a point light source, or OLED of surface light source, but also to diffusion films for solar batteries which require a high level of light diffusion and other various lighting apparatus.

The present inventor examined light scattering phenomenon which is one of the natural phenomena among the interactions between light and materials, such as the light scattering phenomenon between homogeneous media such as cloud, milk or human cellular tissues and particles. Based on this observation, the inventor could design a commercial material which provides uniform and high light diffusion property by controlling the light scattering phenomenon. An important consideration required commonly for the design of light diffusing optical materials using polymers is to provide the compatibility of light transmittance and light diffusion to ensure a desired brightness.

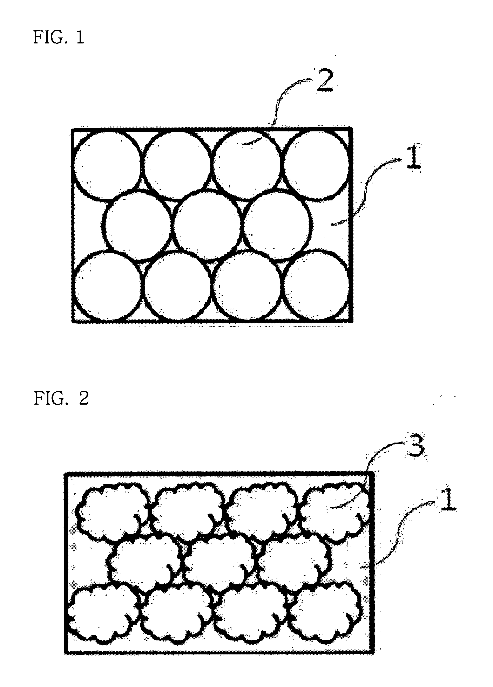

Thus, the inventor had made efforts to devise a method that ensures a high level of light transmittance and light diffusion compatibly, and found out that it was possible to acquire rather higher light transmittance and light diffusion at the same time when there was a small refractive index difference between a polymeric medium (in continuous phase) and polymeric particles (in dispersed phase) unlike prior art and when the volume fraction of the polymeric particles is very high as illustrated in the Figs. 1 and 2. Based on this result, the inventor designed new cross-section morphology of a polymeric material which ensures compatibility of high light scattering and light transmittance without negatively affecting each other and devised a novel approach to form such cross-section morphology. In other words, even though the light scattering of a unit particle may be low due to a small refractive index difference between a medium and the particles, the light scattering intensity increases greatly based on the below Rayleigh equation because the total number (N) of light scattering particles increases if such particles have cross-section morphology with a packed or dense structure owing to the high volume fraction. In addition, it is found that the light passing through an individual particle does not show a big decrease in transmittance due to a small refractive index difference even if the light passes through layers of packed particles. This is because light diffusion increases greatly due to the increase of the light scattering intensity without causing any decrease in total light transmittance by decreasing the light reflection on the interface between the medium and the particles and simultaneously increasing the interface of the particles.

[Rayleigh Equation]

$$I = I_0 \frac{\kappa^4 \beta^2}{2r^2}(1 + \cos^2 \theta) = I_0 \frac{8\pi^4 \beta^2}{\lambda^4 r^2}(1 + \cos^2 \theta) , \qquad \beta = N\alpha^2$$

I: scattering intensity, $\square$ wavelength of light, $\square$ polarization index (N, number of scatterers x $\square$, polarization index)

In addition, if there is a small refractive index difference between the medium and the particles as described above, the present invention shows a successful result in designing the refractive index difference between the medium and the particles, for both cases where the refractive index of the medium is higher than that of the particles and where the refractive index of the particles is higher than that of the medium. Accordingly, the present invention limits the refractive index difference between the medium and the particles to an appropriate level, but not limiting the range of the values depending on any special methods.

The present invention makes use of phase separation phenomenon of immiscible or incompatible polymers which do not mix each other thermodynamically and have a small refractive index difference in order to implement a polymeric material having the cross-section morphology which ensures a high level of light transmittance and light scattering compatibly. That is, immiscible polymers go through a phase separation into a continuous phase and a dispersed phase each other according to their weights due to the difference of thermodynamic free energy when the immiscible polymers are subject to physical mixture, so called blending. Most polymers are immiscible each other, such as the polymer blend of PS (polystyrene) and PMMA (polymethyl methacrylate) as an example. Such an immiscible polymer blend comprises a dispersed phase of appropriate size by phase separation, thereby causing light scattering. This kind of phenomenon is used as a principle of measurement equipment such as DLS (dynamic light scattering) for examining the phase separation structure of an actual polymer blend.

The present invention may use any kind of transparent polymeric materials through which white light can pass, as a first polymer which acts as a light transmissible medium, without any limitation. Such polymeric materials comprise polymers with high transmittance of visible rays, such as PMMA (polymethyl methacrylate), PS (polystyrene), PC (poly carbonate), polyester etc. In addition, phenoxy resin, acrylic resin, epoxy resin or silicone resin may be used where heat resistance is required. Especially, it is preferable to use phenoxy resin in consideration of heat resistance for the present invention.

Next, the present invention may use the same ingredients as the first polymer as a second polymer which acts as light scattering particles, without any limitation.

However, the first polymer and the second polymer should have a structure that prevents the mixture therebetween. Due to such property, the two polymers have a mechanism that generates phase separation during the physical mixture of the two polymers. For example, PS and PMMA are the representative immiscible polymers that do not mix each other. In addition, epoxy resin and acrylic resin, phenoxy resin and acrylic resin, epoxy resin and gum resin also do not mix each other. Furthermore, most polymers and silicone resin make an immiscible polymeric blend.

Alternatively, the present invention may use a block copolymer as the first polymer or as the second polymer in order to implement the phase separation structure of cross-section morphology in various ways.

Next, in order to examine the immiscibility of the first and second polymers, the following method is used. First, a solvent which can dissolve the first and the second polymers is selected, and then the first and the second polymers are mixed and dissolved in the solvent. After that, the solvent is coated and dried on a glass sheet in a predetermined thickness in order to measure turbidity. If the solvent becomes a clear film after it is dried, then the two polymers are miscible polymers each other. If the turbidity is high, then the two polymers are considered immiscible each other. The present invention uses turbidity meter to measure the turbidity of materials, whose unit is NTU (Nephelometric Turbidity Units). Here, transparency is defined for 5 NTU, translucency is defined for 50 NTU, and opaqueness is defined for 500 NTU.

The turbidity appropriate for the immiscibility of the first and the second polymers for the high-efficiency light diffusing polymeric film of the present invention is preferably selected as the range of 50 to 200 NTU. This is because if the turbidity is lower than 50 NTU, then it is almost impossible to acquire light scattering effect, and if the turbidity is higher than 200 NTU, it is very hard to obtain light transmittance.

Moreover, the refractive indices for the first polymer which corresponds to a continuous phase and for the second polymer which corresponds to a dispersed phase are not limited to particular values, when designing the refractive index difference between the first polymer and the second polymer for the high-efficiency light diffusing polymeric film of the present invention. However, it is preferable to have the refractive index difference of 0.001 to 0.5 between the first and second polymers, more preferably of 0.01 to 0.1. It is preferable to appropriately select and design the refractive index difference considering the mixture ratio of the first and second polymers by weight in order to compatibly acquire high light transmittance and light diffusion. If the refractive index difference is lower than 0.001, then it is hard to obtain light scattering effect, and if the refractive index difference is higher than 0.5, then it is not possible to increase the content of the dispersed phase in cross-section morphology due to light scattering effect because the refractive index difference becomes too large.

In addition, the present invention does not limit the shape or size of the dispersed phase in forming a continuous phase and a dispersed phase by physical mixture of the two different polymers. This is because the difference and effect of cross-section morphology based on the density of polymeric particles is more important in the present invention, and because it is possible to freely change the shape and size of the dispersed phase without departing from the present invention.

Furthermore, the present invention may comprise a complete spherical shape for the dispersed phase formed by the second polymer, or may comprise an irregular spherical shape of indefinite form. This is because different shapes can be formed depending upon the miscibility between the first and the second polymers, and the shape does not affect the compatibility of the light transmittance and light diffusion which is main object of the present invention. As an important factor governing the cross-section morphology, the volume fraction of the second polymer is important. Depending on the content of the second polymer, the cross-section morphology may have a dense structure or a structure in which particles maintain a certain distance, thereby affecting optical properties. However, it is preferable for the dispersed phase of the second polymer to have a spherical shape or a near spherical shape, and even though it is true that the size of the dispersed phase formed by the second polymer does not have significant effect; however, it is preferable to have a diameter of 0.5 to 50 □ for the sphere, more preferably 1 to 10 □ in the present invention.

Moreover, the present invention may comprise preferably 30 to 70 parts by weight of the second polymer, and more preferably 40 to 60 parts by weight of the second polymer with respect to 100 parts by weight of the first polymer, in determining the mixing ratio between the first and the second polymers, for the mixing ratio which determines cross-section morphology. Especially, the mixing ratio is determined, preferably based on the miscibility difference through turbidity measurement and the refractive index difference between the two polymers.

Furthermore, the present invention does not limit the polymers to be mixed when there are two or more polymers. When two or more polymers are mixed, the composition and properties of the polymers to be mixed follows those of the first and second polymers in the same way. When a third and a fourth polymers are to be mixed additionally in order to adjust the refractive index difference more finely, it is preferable to adjust the mixing ratio of the additional polymers based on the method described above and general optical properties.

In addition, the present invention may use polymeric resins or low molecular compounds of acrylate series which include energy beam-curable unsaturated compound group in order to stabilize the dispersed phase in cross-section morphology. Importantly, the first polymer and the second polymer should be immiscible each other thermodynamically, and the refractive index difference between the two polymers should be small. The mixing ratio of the energy beam-curable low molecular acrylate with respect to 100 parts by weight of the first and the second polymers is 5 to 95 parts by weight, preferably 10 to 70 parts by weight, and more preferably 30 to 50 parts by weight.

Furthermore, the energy beam-curable acryl resin for forming a cross-linking structure to stabilize the cross-section morphology of the first and second polymers may comprise acrylic oligomers, acrylic monomers, or acrylic polymers with double-bond, or may comprise any kind of energy beam-curable resins, without any limitation. The energy beam-curable acrylic resin comprise at least one double-bond within its molecules, and for instance, low molecular weight compounds known from Japanese Patent Publication No. 60(1985)-196956 and No. 60(1985)-223139 are widely used. Such low molecular weight compounds include acrylate compounds such as trimethyol propane triacrylate, tetramethylol methane tetraacrylate, pentaerythritol triacrylate, epoxy acrylate. Moreover, a photoinitiator may be used to trigger the curing of the energy beam-curable low molecular compounds, and the photoinitiator may comprise for example, benzophenone, acetophenone, dibenzyl, diacetyl, diphenyl sulfide, azobisisobutyronitrile and so on. The above photoinitiator is used normally 0.5 to 10 parts by weight, preferably 1 to 5 parts by weight with respect to the total 100 parts by weight of the energy beam-curable low molecular compounds.

In addition, a polymeric film may be manufactured easily using the polymeric principle as described above in the present invention. The polymeric film can be manufacture in mass production easily through a widely used production process such as usual coating or extrusion. It is also possible to acquire a polymeric film alone or to coat the polymeric film on other transparent substrate as a thin film. Here, the substrate comprises conventional polyester films, acrylic sheets, or glass with electrodes. When the polymeric film is acquired alone or coated on other substrate, an appropriate thickness of the film is preferably 1 to 500 □, more preferably 5 to 100 □, and most preferably 10 to 30 □. If the thickness is less than 1 □, then the light scattering decreases, and if the thickness is larger than 500 □, then the outcome of coating may not be as good as desired. If it is necessary to manufacture the polymeric film with a thickness of 500 □ or thicker, it is preferable to coat using a slot die or to manufacture a sheet through extrusion. In the present invention, it is possible to freely modify the design value of refractive index difference and the mixing ratio of the first and second polymers considering the optical efficiency of the film according to the required polymeric film thickness.

Hereinafter, preferred embodiments of the present invention will be described in detail.

## [Embodiment]

The following Samples 1, 2 and 3 were prepared based on the contents in the Table 1, and the optical properties of the Samples were observed.

### Sample 1: phenoxy resin coating - one component

Phenoxy resin : Toto Kasei Co., Ltd., YP-50
TDI : Soken Co., Ltd., touluene diisocyanate

### Sample 2: phenoxy resin/acrylate resin mixed coating - two components

acrylate resin : Soken Co., Ltd., SK-2147

### Sample 3: phenoxy resin/acrylate resin/UV-curable acrylate mixed coating - three components

UV-curable acrylate    : Aldrich, DPHA (dipenta erithritol hexaacrylate)

Acetophenon           : Saitek Co., Ltd., IR-18

[Table 1]

|  | Refractive index(n) | Sample 1 | Sample 2 | Sample 3 |
|---|---|---|---|---|
| Phenoxy resin | 1.50 | 10.5 | 10.5 | 10.5 |
| DPHA | 1.49 | - | - | 5.0 |
| Poly (ethyl acrylate-co-butyl acrylate) | 1.51 | - | 1.6 | 5.5 |
| TDI | 1.56 | 0.1 | 0.1 | 0.1 |
| Acetophenon | 1.53 | - | - | 0.5 |
| MEK | 1.37 | 19.5 | 25.9 | 41.5 |

(continued)

|  | Refractive index(n) | Sample 1 | Sample 2 | Sample 3 |
|---|---|---|---|---|
| Phenoxy resin/ Acryl scatter ratio | - | 65/35 | 61/39 | 50/50 |
| (The above 'scatter ratio' means the 'mixing ratio' , specifically, the ratio of the content playing a role of scatter) | | | | |

The mixing components of the above Samples 1, 2, and 3 were respectively put into methylethylketone solvent to agitate for three hours, and then the solvent was coated onto a polyterephthalate film substrate having a thickness of 135 □. After that, it was dried at 110°C for 3 minutes to obtain a coated layer of thickness of 70 □. For Sample 3, UV rays were radiated after the mixture of UV-curable low molecular acrylate in order to prevent the decay of the dispersed phase of acrylate.

Next, the turbidity (measured by a turbidity meter), transmittance and haze (measured by the hazemeter by Nakamura Co., LTD.), brightness and CIE (measured by 2D color analyzer) of the coated layer having the coating components of the above Samples 1, 2 and 3 thereon were measured, and the results are in the Table 2.

[Table 2]

| Category | Turbidity (NTU) | Total Light Transmittance (%) | Haze (%) | Brightness (cd/m$^2$) | Hue Uniformity CIE(xy) |
|---|---|---|---|---|---|
| Sample 1 | 15 | 94.68 | 12.63 | 3329 | 0.256/0.257 |
| Sample 2 | 70 | 89.93 | 87.89 | 4842 | 0.298/0.295 |
| Sample 3 | 120 | 92.88 | 98.61 | 5318 | 0.316/0.315 |

As can be seen from the Table 2, the turbidity measurement shows that phenoxy resin and acrylate resin are immiscible each other thermodynamically. With this result, the optical properties show that the haze value increases greatly without causing a big decrease in the total light transmittance in Samples 1 and 2. Moreover, the result further shows excellence in brightness.

As a result of the above embodiment, the high-efficiency light diffusing polymeric film of the present invention shows the compatibility of light transmittance and light diffusion through the phase separation phenomenon of the mixture of different immiscible polymers which have a small refractive index difference, and especially, Sample 3 shows a very high values of 92% and 98% respectively, for the light transmittance and light diffusion.

Thus, the high-efficiency light diffusing polymeric film and polymeric sheet of the present invention have a high level of light transmittance and light diffusion at the same time due to the cross-section morphology which has a small refractive index difference between a continuous phase and a dispersed phase and a high volume fraction of the dispersed phase. Accordingly, the present invention can be effectively used in manufacturing backlight units for LCD of a line light source, LED of a point light source, or OLED of a surface light source, films for solar batteries and other various lighting apparatus which need a high level of light diffusion.

Though the embodiment and claims of the present invention describes two different immiscible polymers; however, more than two different immiscible polymers also remain within the scope of the present invention. For example, a high-efficiency light diffusing polymeric film formed of three different immiscible polymers remains within the scope of the present invention if the three different immiscible polymers comprising a first, a second and a third polymers have a small refractive index difference of 0.001 to 0.5, and comprise 30 to 70 parts by weight of the second and the third polymers with respect to 100 parts by weight of the first polymer. It should be further understood that various changes and modifications within the spirit and scope of the invention will become apparent to those skilled in the art from this detailed description.

**Claims**

1.   A high-efficiency light diffusing polymeric film comprising:

a first polymer which is a light transmissible medium and a second polymer which forms light scattering particles, as two different immiscible polymers that have a small refractive index difference of 0.001 to 0.5, wherein the polymeric film comprises 30 to 70 parts by weight of the second polymer with respect to 100 parts by weight of the first polymer.

2. The polymeric film of Claim 1, wherein the two different immiscible polymers are **characterized in that** when the first and the second polymers are mixed into a solvent and the solvent containing the first and second polymers is dried, the solvent has a turbidity value of 50 to 200 NTU.

3. The polymeric film of Claim 1, wherein the two different immiscible polymers do not mix physically each other, and go through a phase separation into a continuous phase and a dispersed phase, wherein the dispersed phase has a spherical shape or a near spherical shape.

4. The polymeric film of Claim 3, wherein the first polymer and the second polymer comprise at lest one of PMMA (poly methyl methacrylate), PS (poly styrene), PC (poly carbonate), polyester, phenoxy resin, acrylic resin, epoxy resin or silicone resin.

5. The polymeric film of Claim 4, further comprising 5 to 95 parts by weight of energy beam-curable low molecular acrylate with respect to 100 parts by weight of the first and the second polymers, to prevent an additional phase separation of the dispersed phase or the continuous phase in cross-section morphology formed by the two different immiscible polymers and to stabilize the cross-section morphology.

6. A method for manufacturing a high-efficiency polymeric film according to any one of Claim 1 to 5, **characterized in that**
the polymeric film is manufactured such that a first polymer forms a continuous phase and a second polymer forms a dispersed phase through coating or extrusion.

FIG. 1

FIG. 2

Europäisches
Patentamt

European
Patent Office

Office européen
des brevets

# EUROPEAN SEARCH REPORT

Application Number

EP 09 29 0543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 197 765 A1 (DAICEL CHEM [JP]) 17 April 2002 (2002-04-17) * claims 1,10,11,12,19,20 * * paragraph [0018] * * paragraph [0028] - paragraph [0030] * * paragraph [0047] - paragraph [0048] * * paragraph [0096] - paragraph [0099] * ----- | 1-3,5,6 | INV. C08J5/18 C08J7/04 C09D201/00 G02B1/04 G02B5/02 |
| X | US 2007/184212 A1 (NIMURA SHIGEAKI [JP] ET AL) 9 August 2007 (2007-08-09) * page 10, paragraph 138 - paragraph 156 * * page 25, paragraph 346 - paragraph 357 * ----- | 1-6 | |
| | | | TECHNICAL FIELDS SEARCHED (IPC) C08J C09D G02B |

The present search report has been drawn up for all claims

| Place of search | Date of completion of the search | Examiner |
|---|---|---|
| The Hague | 2 September 2010 | Costantini, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 09 29 0543

This annex lists the patent family members relating to the patent documents cited in the above-mentioned European search report.
The members are as contained in the European Patent Office EDP file on
The European Patent Office is in no way liable for these particulars which are merely given for the purpose of information.

02-09-2010

| Patent document cited in search report | | Publication date | Patent family member(s) | | Publication date |
|---|---|---|---|---|---|
| EP 1197765 | A1 | 17-04-2002 | CN | 1366617 A | 28-08-2002 |
| | | | DE | 60101196 D1 | 18-12-2003 |
| | | | DE | 60101196 T2 | 15-04-2004 |
| | | | WO | 0171395 A1 | 27-09-2001 |
| | | | TW | 512241 B | 01-12-2002 |
| | | | US | 2003025856 A1 | 06-02-2003 |
| US 2007184212 | A1 | 09-08-2007 | JP | 2008003541 A | 10-01-2008 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 60196956 A

- JP 60223139 A

**Non-patent literature cited in the description**

- journal Nature. *Nature,* May 2008